# EUROPÄISCHE PATENTANMELDUNG

(11) **EP 3 542 989 A1**
(43) Veröffentlichungstag der Anmeldung: **25.09.2019**
(21) Anmeldenummer: 18162865.2
(22) Anmeldetag: 20.03.2018
(51) Int. Cl.: B29C 63/02, B29C 47/06, B29C 45/14

(54) **KUNSTSTOFFBAUTEIL UND VERFAHREN ZUM HERSTELLEN DES KUNSTSTOFFBAUTEILS**

(71) Anmelder: Motherson Innovations Company Limited, London, Greater London EC3A 6AP (GB)
(72) Erfinder: GATZER, Torsten, 96528 Bachfeld (DE); KALKUS, Daniel, 96215 Lichtenfels (DE); MÜLLER, Ralf, 96215 Lichtenfels (DE); LANG, Georg, 96052 Bamberg (DE)
(74) Vertreter: Isarpatent

(57) **Zusammenfassung**

Die vorliegende Erfindung betrifft ein Kunststoffbauteil (6) für ein Fahrzeug, wobei das Kunststoffbauteil (6) als Extrusions- oder Spritzgusselement (7) oder als Extrusions- oder Spritzgusselement (7) mit einer Basis (16) ausgebildet ist,
wobei wenigstens ein Abschnitt der Außenseite des Extrusions- oder Spritzgusselements (7) mit einer Kombination aus einer Lackfolie (2) und einer Lackfolien- und Kunststoffelement-Verbindungsschicht (3) beschichtet ist, wobei die Lackfolien- und Kunststoffelement-Verbindungsschicht (3) zwischen der Lackfolie (2) und der Außenseite des Extrusions- oder Spritzgusselements (7) vorgesehen ist und eine stoffliche Verbindung mit dem Extrusions- oder Spritzgusselement (7) und eine stoffliche Verbindung mit der Lackfolie (2) eingeht, wobei die stoffliche Verbindung der Lackfolien- und Kunststoffelement-Verbindungsschicht (3) mit der Lackfolie (3) und dem Extrusions- oder Spritzgusselement (7) ausreichend ist, um die Lackfolie (2) mit dem Extrusions- oder Spritzgusselement (7) durch die Lackfolien- und Kunststoffelement-Verbindungsschicht(3) fest zu verbinden, wobei das Extrusions- oder Spritzgusselement (7) aus einem Kunststoffmaterial (8) hergestellt ist, welches ohne die Lackfolien- und Kunststoffelement-Verbindungsschicht (3) als Zwischenschicht mit der Lackfolie (2) keine oder keine ausreichende stoffliche Verbindung eingeht.

## Beschreibung

### GEBIET DER ERFINDUNG

Die vorliegende Erfindung betrifft ein Kunststoffbauteil, insbesondere für ein Fahrzeug, sowie ein Verfahren zum Herstellen des Kunststoffbauteils.

### TECHNISCHER HINTERGRUND

Bisher werden Karosserieteile, sowie Anbauteil wie beispielsweise Zierleisten an einem Fahrzeug, im Allgemeinen lackiert, insbesondere spritzlackiert. Ein solcher Spritzlackierungsprozess ist jedoch aufwendig und teuer.

Aus der EP 2 374 593 A1 ist ein Verfahren bekannt, bei welchem eine Mehrschichtfolie mit mindestens einer apolaren Schicht und mindestens einer zweiten Schicht mit mindestens einer anderen Oberflächeneigenschaft als die erste Schicht derart in die Kavität eines Spritzgusswerkzeugs eingelegt, dass die erste apolare Schicht dem Innenraum der Kavität zugewandt ist während die zweite Schicht auf der Innenwand der Kavität zu liegen kommt. Ein apolares Polymer wird dann in den Innenraum der Form gespritzt. Das eingespritzte Polymer sowie die erste apolare Schicht der Mehrschichtfolie stehen in der Form in Berührung und verbinden sich in der Folge. Als apolar wird ein Material und/oder eine Oberfläche verstanden, die eine Oberflächenspannung von weniger als 35mN/m aufweist. Als polar wird ein Material und/oder eine Oberfläche verstanden, die eine Oberflächenspannung von mehr als 37mN/m aufweist.

Dies hat jedoch den Nachteil, dass der hergestellte Formkörper auf einen apolaren Polymerformkörper beschränkt ist. Des Weiteren ist die Größe des apolaren Polymerformkörpers durch die Größe des Spritzgusswerkzeugs beschränkt und eignet sich insbesondere nicht für lange Formkörper, wie beispielsweise Fahrzeugzierleisten.

### ZUSAMMENFASSUNG DER ERFINDUNG

Vor diesem Hintergrund liegt der vorliegenden Erfindung die Aufgabe zugrunde, ein verbessertes Kunststoffbauteil, insbesondere eine Fahrzeugzierleiste, bereitzustellen.

Erfindungsgemäß wird diese Aufgabe durch ein Kunststoffbauteil mit den Merkmalen des Patentanspruchs 1, durch eine Verfahren mit den Merkmalen des Patentanspruchs 14 und/oder durch ein Verfahren mit den Merkmalen des Patentanspruches 15 gelöst.

### Demgemäß ist vorgesehen:

Ein Kunststoffbauteil für ein Fahrzeug, wobei das Kunststoffbauteil als Extrusions- oder Spritzgusselement oder als Extrusions- oder Spritzgusselement mit einer Basis ausgebildet ist, wobei wenigstens ein Abschnitt der Außenseite des Extrusions- oder Spritzgusselements mit einer Kombination aus einer Lackfolie und einer Lackfolien- und Kunststoffelement-Verbindungsschicht beschichtet ist, wobei die Lackfolien- und Kunststoffelement-Verbindungsschicht zwischen der Lackfolie und der Außenseite des Extrusions- oder Spritzgusselements vorgesehen ist und eine stoffliche Verbindung mit dem Extrusions- oder Spritzgusselement und eine stoffliche Verbindung mit der Lackfolie eingeht, wobei die stoffliche Verbindung der Lackfolien- und Kunststoffelement-Verbindungsschicht mit der Lackfolie und dem Extrusions- oder Spritzgusselement ausreichend ist, um die Lackfolie mit dem Extrusions- oder Spritzgusselement durch die Lackfolien- und Kunststoffelement-Verbindungsschicht fest zu verbinden, wobei das Extrusions- oder Spritzgusselement aus einem Kunststoffmaterial hergestellt ist, welches ohne die Lackfolien- und Kunststoffelement-Verbindungsschicht als Zwischenschicht mit der Lackfolie keine oder keine ausreichende stoffliche Verbindung eingeht.

Das Kunststoffbauteil hat den Vorteil, dass durch die Lackfolien- und Kunststoffelement-Verbindungsschicht als Zwischenschicht ein Extrusions- oder Spritzgusselement aus einem Kunststoffmaterial mit einer Lackfolie beschichtet werden kann, welches ansonsten mit der Lackfolie keine geeignete stoffliche Verbindung eingehen würden, wenn die Lackfolie direkt oder unmittelbar auf das Extrusions- oder Spritzgusselement aufgebracht würde.

### Weiter ist vorgesehen:

Ein Verfahren zur Herstellung eines Kunststoffbauteils mit den Schritten:
Bereitstellen einer Extrusionsvorrichtung;
Bereitstellen einer Beschichtungsvorrichtung;
Bereitstellen eines Lacktransferfoliensystems, welches wenigstens eine Kombination aus einer Lackfolie und einer auf der Unterseite der Lackfolie angeordneten Lackfolien- und Kunststoffelement-Verbindungsschicht aufweist,
Herstellen eines Kunststoffbauteils als Extrusionselement oder als Extrusionselement mit einer Basis aus einem Kunststoffmaterial durch die Extrusionsvorrichtung;
Beschichten wenigstens eines Abschnitts der Außenseite des Extrusionselement mit der Kombination aus der Lackfolie und der Lackfolien- und Kunststoffelement-Verbindungsschicht, wobei die Lackfolien- und Kunststoffelement-Verbindungsschicht zwischen der Lackfolie und dem Extrusionselement auf dem Extrusionselement angeordnet ist.

Das Verfahren hat den Vorteil, dass ein beschichtetes Kunststoffbauteil hergestellt werden kann, obwohl das Extrusionselement aus einem Kunststoffmaterial ist, welches mit der Lackfolie ohne die Lackfolien- und Kunststoffelement-Verbindungsschicht als Zwischenschicht keine ausreichende stoffliche Bindung eingehen würde.

### Weiter ist vorgesehen:

Ein Verfahren zur Herstellung eines Kunststoffbauteils mit den Schritten:
Bereitstellen einer Spritzgussform mit einer ersten und zweiten Formhälfte;
Bereitstellen eines Lacktransferfoliensystems, welches wenigstens eine Kombination aus einer Lackfolie und einer auf der Unterseite der Lackfolie angeordneten Lackfolien- und Kunststoffelement-Verbindungsschicht aufweist,
Einlegen der Kombination aus der Lackfolie und der Lackfolien- und Kunststoffelement-Verbindungsschicht in eine der Formhälften, derart, dass die Lackfolie der Innenseite der Formhälfte gegenüberliegt und die Rückseite der Lackfolien- und Kunststoffelement-Verbindungsschicht hinterspritzbar ist;
Hinterspritzen der Rückseite der Lackfolien- und Kunststoffelement-Verbindungsschicht mit dem Kunststoffmaterial zum Erzeugen des Spritzgusselements; und
Entnehmen des mit der Lackfolie und der Lackfolien- und Kunststoffelement-Verbindungsschicht beschichteten Spritzgusselements als fertiges beschichtetes Kunststoffbauteil.

Das Verfahren hat den Vorteil, dass ein beschichtetes Kunststoffbauteil hergestellt werden kann, obwohl das Spritzgusselement aus einem Kunststoffmaterial ist, welches mit der Lackfolie ohne die Lackfolien- und Kunststoffelement-Verbindungsschicht als Zwischenschicht keine ausreichende stoffliche Bindung eingehen würde.

Die der vorliegenden Erfindung zugrunde liegende Erkenntnis/Idee besteht darin, ein Extrusions- oder Spritzgusselement mit einer Lackfolie zu beschichten, wobei das Extrusions- oder Spritzgusselement dabei aus einem Kunststoffmaterial hergestellt ist, welches mit der Lackfolie direkt keine stoffliche oder ausreichende stoffliche Bindung eingehen würde und daher zu einem ungewollten Lösen von Lackfolie und Extrusions- bzw. Spritzgusselement führen würde. Gemäß der Erfindung wird zum Herstellen einer festen Verbindung zwischen Lackfolie und dem Extrusions- oder Spritzgusselement aus mit einem mit der Lackfolie inkompatiblen Kunststoffmaterial eine Lackfolien- und Kunststoffelement-Verbindungsschicht als Zwischenschicht zwischen der Lackfolie und dem Extrusions- oder Spritzgusselement vorgesehen. Die Lackfolien- und Kunststoffelement-Verbindungsschicht ist dabei derart ausgebildet, dass sie auf einer Seite mit der Lackfolie und auf der anderen Seite mit dem Kunststoffmaterial des Extrusions- oder Spritzgusselements eine ausreichende stoffliche Verbindung eingeht, welche ein ungewolltes Lösen der Lackfolie und/oder des Extrusions- oder Spritzgusselements von dem fertigen beschichteten Kunststoffbauteil verhindert, d.h. stattdessen die Lackfolie mit dem Extrusions- oder Spritzgusselement fest verbindet.

Vorteilhafte Ausgestaltungen und Weiterbildungen ergeben sich aus den weiteren Unteransprüchen sowie aus der Beschreibung unter Bezugnahme auf die Figuren der Zeichnung.

In einer erfindungsgemäßen Ausführungsform besteht das Kunststoffmaterial des Extrusions- oder Spritzgusselement aus einem Kunststoff oder einer Kombination aus wenigstens zwei Kunststoffen.

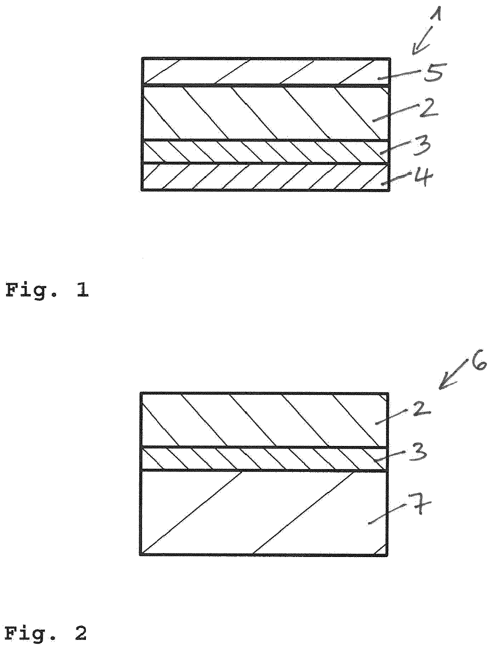

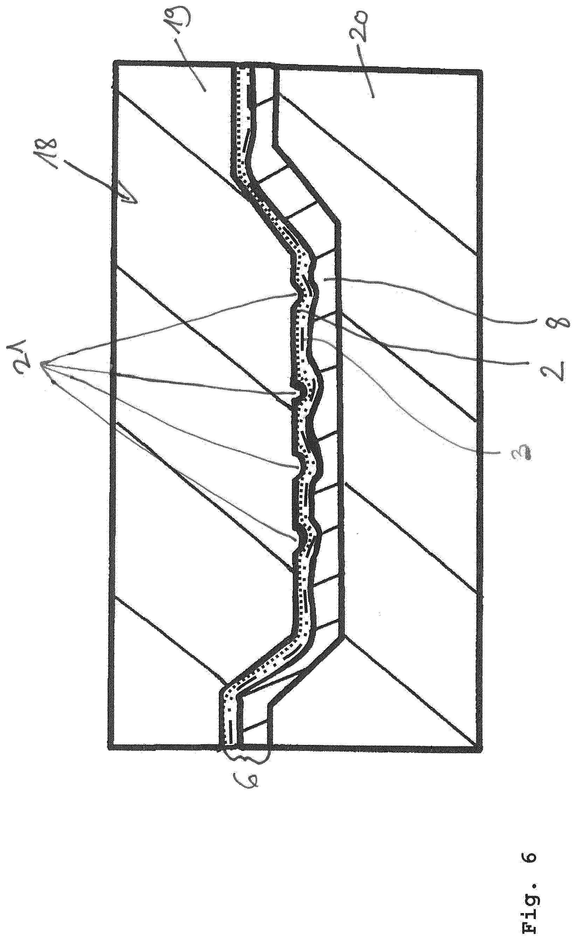

In einer weiteren erfindungsgemäßen Ausführungsform besteht das Kunststoffmaterial aus Acrylnitril-Butadien-Styrol-Copolymere (ABS), Polycarbonat (PC) und/oder Benzylcellulose (BC). Kunststoffmaterial aus Acrylnitril-Butadien-Styrol-Copolymere (ABS), Polycarbonat (PC) und/oder Benzylcellulose (BC). Es kann insbesondere bei dem Extrusionselement verwendet werden, wie es im Folgenden mit Bezug auf die Fig. 1-5 beispielhaft beschrieben wird. Ebenso kann als Kunststoffmaterial für das Extrusions- oder Spritzgusselement Polyvinylchlorid (PVC) oder Polypropylen (PP) verwendet werden. Je nach Funktion und Einsatzzweck kann Polyvinylchlorid (PVC) beliebiger Härte eingesetzt werden einschließlich Hart-PVC oder Weich-PCV. Dabei kann Polyvinylchlorid (PVC) und/oder Polypropylen (PP) inbesondere bei dem Spritzgusselement verwendet werden, wie es im Folgenden mit Bezug auf. Fig. 6 beschrieben wird.

Gemäß einer erfindungsgemäßen Ausführungsform besteht die Lackfolien- und Kunststoffelement-Verbindungsschicht aus wenigstens einer thermoplastischen Schicht oder einer Kombination von mehreren thermoplastischen Schichten aus demselben oder unterschiedlichen Thermoplasten.

In einer erfindungsgemäßen Ausführungsform ist die wenigstens eine thermoplastische Schicht eine Acrylnitril-Butadien-Styrol (ABS)-Schicht, eine Polyamide (PA)-Schicht, eine Polylactat (PLA)-Schicht, eine Polymethylmethacrylat (PMMA)-Schicht, eine Polycarbonat (PC)-Schicht, eine Polyethylenterephthalat (PET)-Schicht, eine Polyethylen (PE)-Schicht, eine Polypropylen (PP)-Schicht, eine Polystyrol (PS)-Schicht, eine Polyetheretherketon (PEEK)-Schicht oder eine Polyvinylchlorid (PVC)-Schicht.

In einer weiteren erfindungsgemäßen Ausführungsform sind nur die Lackfolie oder alternativ die Lackfolie und ihre darunter liegende Lackfolien- und Kunststoffelement-Verbindungsschicht strukturiert.

In einer anderen erfindungsgemäßen Ausführungsform ist das Kunststoffmaterial zusätzlich mit Partikel versehen.

In einer weiteren erfindungsgemäßen Ausführungsform liegt der Anteil an Partikeln in dem Kunststoffmaterial des Extrusionsteils in einem Bereich von 20% bis 30%.

Gemäß einer erfindungsgemäßen Ausführungsform weisen die Partikel einen Durchmesser in einem Bereich von 40µm bis 60µm und vorzugsweise von 45µm bis 55µm und besonders bevorzugt von 50µm +/-4µm auf.

In einer erfindungsgemäßen Ausführungsform ist nur die Lackfolie oder die Lackfolie und ihre Lackfolien- und Kunststoffelement-Verbindungsschicht durch eine Strukturierungsvorrichtung strukturiert, wobei die Strukturierungsvorrichtung z.B. wenigstens ein Narbroller und/oder eine Besprenkelungs- und/oder Spritzdüseneinrichtung ist.

In einer weiteren erfindungsgemäßen Ausführungsform ist das Kunststoffbauteil eine Fahrzeugblende, Fahrzeugleiste, insbesondere Dachleiste oder Wasserabweiserleiste, eine Fahrzeugscheibeneinfassung oder eine Schachtleiste.

In noch einer weiteren erfindungsgemäßen Ausführungsform weist das Kunststoffbauteil ein Zusatzbauteil auf oder ist als ein Zusatzbauteil ausgebildet.

Gemäß einer erfindungsgemäßen Ausführungsform ist das Extrusions- oder Spritzgusselement als eine Beschichtung auf zumindest einem Abschnitt der Basis aufgebracht und die Basis ist vorzugsweise ein Profil aus Metall und insbesondere aus Aluminium, einer Aluminiumlegierung oder Stahl.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: eine Schnittansicht eines Lacktransferfoliensystems zum Beschichten eines Kunststoffbauteils gemäß der Erfindung;
- Fig. 2: eine Schnittansicht eines mit dem Lacktransferfoliensystem gemäß Fig. 1 beschichteten erfindungsgemäßen Kunststoffbauteils;
- Fig. 3: eine Perspektivansicht eines Ablaufs der Herstellung eines beschichteten Kunststoffbauteils gemäß einer Ausführungsform der Erfindung;
- Fig. 4: eine Schnittansicht des beschichteten Kunststoffbauteils gemäß Fig. 3;
- Fig. 5: eine Schnittansicht eines beschichteten Kunststoffbauteils gemäß einer weiteren Ausführungsform der Erfindung; und
- Fig. 6: eine Schnittansicht einer Spritzgussform und eines Zusatzbauteils.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist -jeweils mit denselben Bezugszeichen versehen.

### BESCHREIBUNG VON AUSFÜHRUNGSBEISPIELEN

In Fig. 1 ist eine Schnittansicht eines Ausführungsbeispiels eines Lacktransferfoliensystems 1 gezeigt zum Beschichten eines Extrusionselements, um ein erfindungsgemäßes beschichtetes Kunststoffbauteil zu erzeugen.

Das Lacktransferfoliensystem 1 weist dabei eine Lackfolie 2 und wenigstens eine Lackfolien- und Kunststoffelement-Verbindungsschicht 3 auf. Des Weiteren ist wahlweise zusätzlich eine Trägerschicht 4 auf der Unterseite der Lackfolien- und Kunststoffelement-Verbindungsschicht 3 vorgesehen. Die Trägerschicht 4 dient insbesondere zum Lagern der Lackfolie 2, beispielsweise zum Aufrollen der Lackfolie zu einer Rolle oder blattförmigen Übereinanderschichten der Lackfolie, sowie zum Transportieren der Lackfolie im Rahmen der Verarbeitung der Lackfolie 2.

Wahlweise zusätzlich kann ebenso eine Schutzschicht 5 auf der Oberseite der Lackfolie 2 vorgesehen werden, wie in Fig. 1 dargestellt ist. Die Schutzschicht 5 ist derart ausgebildet die Lackfolie 2 vor Beschädigung und/oder äußeren Einflüssen zu schützen. Diese Schutzschicht 5 kann beispielsweise vor oder nach dem Aufbringen der Lackfolie 2 auf das Extrusionselement wieder entfernt werden. Die Trägerschicht 4 wird dagegen von der Lackfolien- und Kunststoffelement-Verbindungsschicht 3 vor dem Aufbringen der Lackfolie 2 auf das Extrusionselement entfernt.

Die Lackfolie 2 kann eine Schicht oder mehrere Schichten aufweisen, um beispielsweise einen bestimmten Glanzeffekt, insbesondere Hochglanzeffekt, einen Metall-Effekt, Matt-Effekt, Farbeffekt, Abbildungseffekt der Struktur oder Prägung der Oberfläche des Extrusionselements zu erzielen.

Die Lackfolien- und Kunststoffelement-Verbindungsschicht 3 ist derart ausgebildet, dass die Lackfolie 2 mit dem Extrusionselement verbunden werden kann, wenn die Lackfolie 2 und das Extrusionselement sich nicht oder nicht ausreichend verbinden würden, wenn die Lackfolie 2 direkt auf das Extrusionselement aufgebracht würde, da das Material oder die Materialkombination der Lackfolie 2 keine stoffliche Verbindung oder keine ausreichende stoffliche Verbindung mit dem Material oder Materialkombination des Extrusionselements eingeht.

Die Lackfolien- und Kunststoffelement-Verbindungsschicht 3 kann beispielsweise aus wenigstens einer thermoplastischen Schicht oder eine Kombination von mehreren thermoplastischen Schichten aus demselben oder unterschiedlichen Thermoplasten bestehen. Als eine thermoplastische Schicht kann dabei beispielsweise eine Acrylnitril-Butadien-Styrol (ABS)-Schicht, eine Polyamide (PA)-Schicht, eine Polylactat (PLA)-Schicht, eine Polymethylmethacrylat (PMMA)-Schicht, eine Polycarbonat (PC)-Schicht, eine Polyethylenterephthalat (PET)-Schicht, eine Polyethylen (PE)-Schicht, eine Polypropylen (PP)-Schicht, eine Polystyrol (PS)-Schicht, eine Polyetheretherketon (PEEK)-Schicht oder eine Polyvinylchlorid (PVC)-Schicht vorgesehen werden. Ebenso können je nach Lackfolie 2 und Extrusionselement wenigstens zwei der zuvor genannten thermoplastischen Schichten auch miteinander kombiniert werden zu einer zum Verbinden der Lackfolie 2 und des Extrusionselements geeigneten Lackfolien- und Kunststoffelement-Verbindungsschicht 3.

Zum Verbinden einer Lackfolie 2 mit einem Extrusionselement aus einer PC/ABS- Mischung aus Polycarbonat (PC) und Acrylnitril-Butadien-Styrol-Copolymere (ABS) kann als Lackfolien- und Kunststoffelement-Verbindungsschicht 3 eine Lackfolien- und Kunststoffelement-Verbindungsschicht 3 vorgesehen werden, welche beispielsweise aus wenigstens einer Polymethylmethacrylat (PMMA)-Schicht und/oder einer Polyvinylchlorid (PVC)-Schicht besteht.

Zum Verbinden einer Lackfolie mit einem Extrusionselement aus einer ABS/BC-Mischung aus Acrylnitril-Butadien-Styrol-Copolymere (ABS) und Benzylcellulose (BC) kann als Lackfolien- und Kunststoffelement-Verbindungsschicht 3 eine Lackfolien- und Kunststoffelement-Verbindungsschicht 3 vorgesehen werden, welche ebenfalls z.B. aus wenigstens einer Polymethylmethacrylat (PMMA)-Schicht und/oder einer Polyvinylchlorid (PVC)-Schicht besteht.

Ohne eine derartige Lackfolien- und Kunststoffelement-Verbindungsschicht 3 aus wenigstens einer Polymethylmethacrylat (PMMA)-Schicht und/oder einer Polyvinylchlorid (PVC)-Schicht würde sich die Lackfolie 2 nicht mit dem Extrusionselement aus einer ABS/BC-Mischung oder einer PC/ABS- Mischung geeignet verbinden, da die Lackfolie keine oder keine ausreichende stoffliche Verbindung mit dem Extrusionselement eingeht. Gleiches gilt, wenn das Extrusionselement aus Polyvinylchlorid (PVC) oder Polypropylen (PP) oder aus ABS, BC oder PC allein hergestellt ist. Bei der Verwendung von Polyvinylchlorid (PVC) kann Polyvinylchlorid je nach Funktion und Einsatzzweck einer beliebigen Härte eingesetzt werden, insbesondere Hart-PVC und/oder Weich-PVC.

Mittels der Lackfolien- und Kunststoffelement-Verbindungsschicht 3 können jedoch solche Extrusionselemente beispielsweise aus einer ABS/BC-Mischung oder einer PC/ABS-Mischung mit einer Lackfolie 2 geeignet beschichtet werden, was sonst nicht möglich ist, da die Lackfolie 2 mit einem solchen Extrusionselement keine geeignete stoffliche Verbindung eingeht. Ebenso kann das Extrusionselement insbesondere auch aus einem Polyvinylchlorid (PVC) oder Polypropylen (PP) hergestellt sein.

In Fig. 2 ist eine Schnittansicht eines mit dem Lacktransferfoliensystem 1 gemäß Fig. 1 beschichteten erfindungsgemäßen Kunststoffbauteils 6 gezeigt.

Das Kunststoffbauteil 6 weist dabei ein Extrusionselement 7 auf, welches beispielsweise aus einer ABS/BC-Mischung oder einer PC/ABS- Mischung oder aus PVC, PP, PC, ABS oder BC hergestellt ist. Dabei ist zumindest ein Bereich der Außenseite des Extrusionselements 7, beispielsweise die Sichtseite im Falle einer Fahrzeug-Zierleiste als Beispiel für ein Kunststoffbauteil 6, mit der Lackfolie 2 und ihrer Lackfolien- und Kunststoffelement-Verbindungsschicht 3 beschichtet. Zum Verbinden der Lackfolie 2 mit dem Kunststoffbauteil 6, ist die Lackfolie 2 mit ihrer Lackfolien- und Kunststoffelement-Verbindungsschicht 3 auf das Extrusionselement 7 aufgebracht, um die Lackfolie 2 durch die Lackfolien- und Kunststoffelement-Verbindungsschicht 3 mit dem Extrusionselement 7 geeignet zu verbinden.

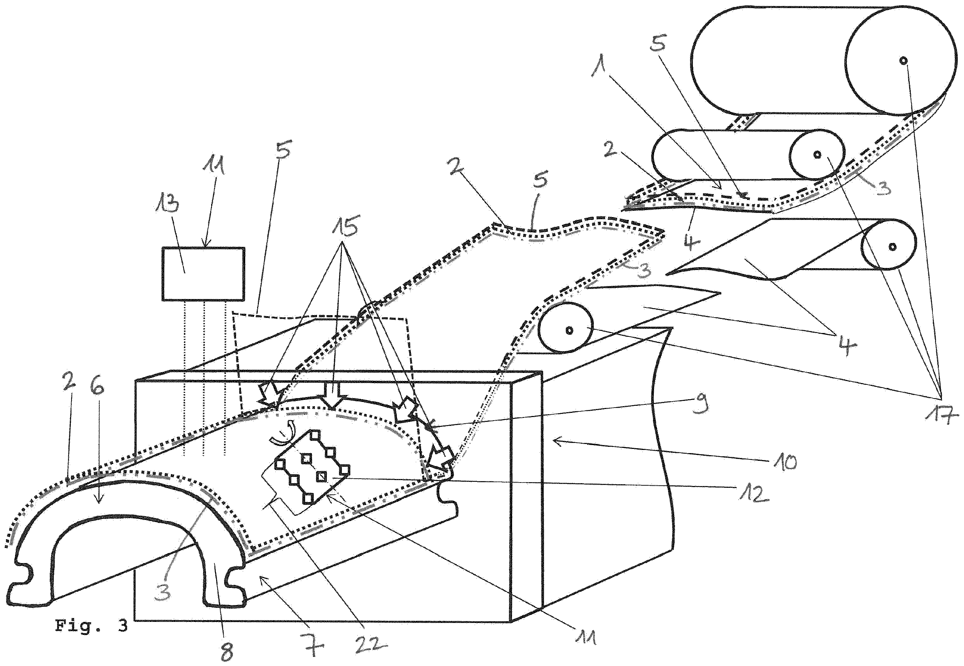

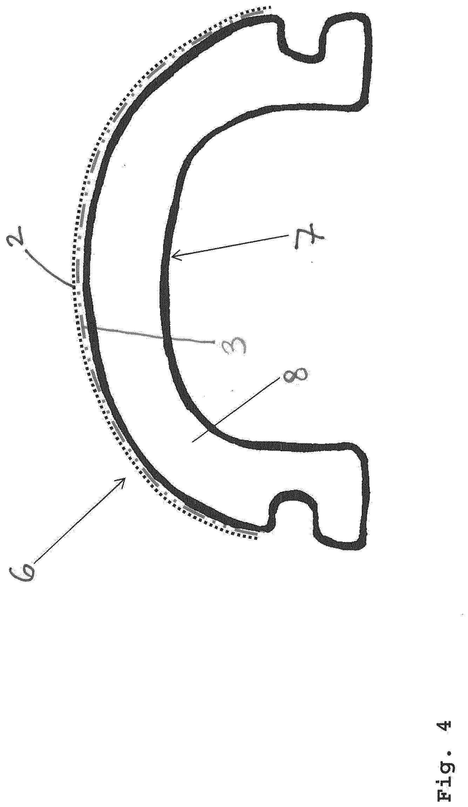

In Fig. 3 ist eine Perspektivansicht eines Ablaufs der Herstellung eines beschichteten Kunststoffbauteils 6 gemäß einer Ausführungsform der Erfindung gezeigt. Die Darstellung in Fig. 3 ist dabei rein schematisch und stark vereinfacht sowie nicht maßstäblich. In Fig. 4 ist dabei ein Beispiel des fertig herstellten beschichteten Kunststoffbauteils 6 gemäß Fig. 3 in einer Schnittansicht gezeigt.

Wir zuvor beschrieben werden Karosserieteile, sowie Anbauteil an einem Fahrzeug bisher in der Regel lackiert. Die Oberflächen solcher Karosserielacke bei einem Fahrzeug sowie die lackierten Oberflächen von aus Kunststoff hergestellten Anbauteilen zeigen in Abhängigkeit von dem Lackierverfahren auf der Oberfläche eine ausgeprägte Struktur. Im allgemeinen Sprachgebrauch wird diese Struktur in Fachkreisen als sog. Orangenhaut bezeichnet.

Statt des Lackierens beispielsweise von Anbauteilen, wie Blenden oder Leisten, Dachträgern usw., kann ein extrudiertes Anbauteil in hochglanzschwarz oder auch in dem jeweiligen Karosseriefarbton mittels der Kombination aus der Lackfolie 2 und der Lackfolien- und Kunststoffelement-Verbindungsschicht 3 hergestellt werden. In diesem Fall müssen die Teile nicht mehr in einem zusätzlichen Arbeitsgang wie bisher lackiert werden. Stattdessen kann die lackartige Oberfläche durch die Kombination aus der Lackfolie 2 und der Lackfolien- und Kunststoffelement-Verbindungsschicht 3 erzeugt werden.

Wie in dem Ausführungsbeispiel in Fig. 3 gezeigt ist, wird das Kunststoffbauteil 6 mittels eines Extrusionsverfahrens aus einem Kunststoffmaterial beispielsweise vollständig als Extrusionselement 7 hergestellt.

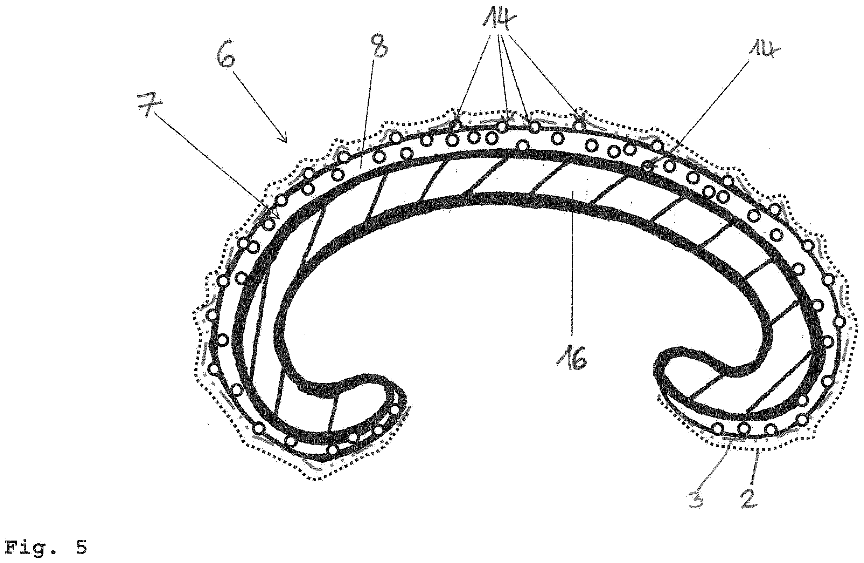

In einer alternativen erfindungsgemäßen Ausführungsform kann das Kunststoffbauteil 6 auch nur teilweise als Extrusionselement 7 hergestellt bzw. als ein Extrusionselement 7 mit einer zusätzlichen Basis ausgebildet sein, wie in nachfolgender Fig. 5 gezeigt ist. Hierbei wird beispielsweise eine Basis, z.B. ein Metallprofil, in wenigstens einem Abschnitt, z.B. an seiner Außenseite oder Sichtseite, mit dem Extrusionelement 7 versehen. Dazu wird die Basis mit dem Kunststoffmaterial mittels des Extrusionsverfahrens in dem wenigstens einen Abschnitt beschichtet, um die Basis mit dem Extrusionselement 7 zu versehen, welches in wenigstens einem Bereich mit der Kombination aus Lackfolie 2 und Lackfolien- und Kunststoffelement-Verbindungsschicht 3 beschichtet wird.

Das Kunststoffmaterial besteht dabei aus einem Kunststoff oder einer Kombination aus wenigstens zwei Kunststoffen. Als Kunststoff kann beispielsweise Acrylnitril-Butadien-Styrol-Copolymere (ABS), Polycarbonat (PC) oder Benzylcellulose (BC) verwendet werden, sowie eine Mischung aus wenigstens zwei Kunststoffen, wie beispielsweise die zuvor beschrieben ABS/BC-Mischung oder die zuvor beschriebene PC/ABS- Mischung.

Das Kunststoffbauteil 6 kann dabei als Anbauteil für ein Fahrzeug, beispielsweise als Blende oder Leiste, Dachleiste oder Wasserabweiser, Schachtleiste, Fahrzeugscheibeneinfassung usw., ausgebildet sein.

Bei der Extrusion wird das Kunststoffmaterial 8 aus wenigstens einem Kunststoff oder eine Mischung aus wenigstens zwei Kunststoffen aufgeschmolzen, z.B. kontinuierlich aufgeschmolzen, und durch eine formgebende Düse 9 einer Extrusionsvorrichtung 10 ausgetragen, wie in Fig. 3 stark vereinfacht und nicht maßstäblich dargestellt ist. Dabei wird mittels der formgebenden Düse 9 als Anbauteil für ein Fahrzeug in Fig. 3 beispielsweise eine Leiste oder Blende als Kunststoffbauteil 6 ausgebildet.

In einer alternativen Ausführungsform, wie sie in nachfolgender Fig. 5 gezeigt wird, kann das Kunststoffbauteil 6 statt vollständig aus dem Kunststoffmaterial 8 auch beispielsweise nur teilweise aus dem Kunststoffmaterial 8 hergestellt werden. Zum Beispiel kann das Kunststoffbauteil eine Basis, z.B. ein Metallprofil aus Aluminium, einer Aluminiumlegierung oder Stahl usw., aufweisen, das in wenigstens einem Abschnitt mit dem Kunststoffmaterial 8 durch Extrusion beschichtet wird zum Ausbilden des Kunststoffbauteils 6 als Extrusionselement 7 mit einer Basis. Anschließend wird der durch Extrusion mit dem Kunststoffmaterial 8 beschichtete Abschnitt des Kunststoffbauteils 6 auf seiner Außenseite mit einer Kombination aus der Lackfolie 2 und der Lackfolien- und Kunststoffelement-Verbindungsschicht 3 beschichtet zum Ausbilden des fertigen beschichteten Kunststoffbauteils 6. Die Kombination aus Lackfolie 2 und Lackfolien- und Kunststoffelement-Verbindungsschicht 3 wird dabei mit der Lackfolien- und Kunststoffelement-Verbindungsschicht 3 auf die Außenseite bzw. den zu beschichteten Bereich des Extrusionselements 7 aufgebracht. Die Lackfolien- und Kunststoffelement-Verbindungsschicht 3 schafft als Zwischenschicht zwischen der Lackfolie 2 und dem Extrusionselement 7 eine Verbindung zwischen der Lackfolie 2 und dem Extrusionselement 7, die ohne diese Lackfolien- und Kunststoffelement-Verbindungsschicht 3 nicht möglich wäre, da die Lackfolie 2 keine geeignete stoffliche Verbindung mit dem Extrusionselement 7 eingehen würden, wenn sie direkt auf das Extrusionselement 7 aufgebracht würde.

In einer weiteren erfindungsgemäßen Ausführungsform können beispielsweise zur Ausbildung des mit dem Kunststoffmaterial 8 beschichteten Abschnitts des Kunststoffbauteils 6 mit einer definierten Oberflächenstruktur und vor dem abschließenden Aufbringen der Kombination aus Lackfolie 2 und Extrussionselement-Verbindungsschicht 3, dem Kunststoffmaterial nachfolgend näher beschriebene Partikel zugemischt werden.

Das Zumischen von Partikeln wird beispielhaft mit Bezug auf das Ausführungsbeispiel in nachfolgender Fig. 5 beschrieben.

Im Gegensatz zu den Darstellungen in den Fig. 3 und 4, in welcher das Kunststoffbauteil 6 vollständig als Extrusionselement 7 ausgebildet wird, wird bei dem in nachfolgender Fig. 5 gezeigten Ausführungsbeispiel die Basis, z.B. ein Metallprofilm, über eine nicht dargestellte Basis-Zuführungsvorrichtung der Extrusionsvorrichtung 10 zugeführt und die Basis mittels der Extrusionsvorrichtung 10 mit dem Kunststoffmaterial 8 beschichtet. Anschließend wird das Extrusionselement 7 mit der Kombination aus der Lackfolie 2 und der Lackfolien- und Kunststoffelement-Verbindungsschicht 3 beschichtet und bildet durch die dem Kunststoffmaterial 8 beigemischten Partikel und/oder durch das Strukturieren mit einer im Folgenden noch näher beschriebenen Strukturierungsvorrichtung zusätzlich eine strukturierte Oberfläche aus.

Das Beschichten des Extrusionselements 7 mit der Kombination aus der Lackfolie 2 und der Lackfolien- und Kunststoffelement-Verbindungsschicht 3 kann unmittelbar oder zu einem späteren Zeitpunkt nach dem Verlassen der Extrusionsvorrichtung 10, in welcher das Extrusionselement 7 ausgebildet wird, erfolgen.

Beispielsweise kann das Beschichten des Extrusionselements 7 nach einem anschließenden Abkühlbad für das Extrusionselement 7 erfolgen. Die Erfindung ist aber auf die genannten Beispiele zum Zeitpunkt des Aufkaschierens der Kombination aus Lackfolie 2 und Lackfolien- und Kunststoffelement-Verbindungsschicht 3 auf das Extrusionselement 7 nicht beschränkt. Die Kombination aus Lackfolie 2 und Lackfolien- und Kunststoffelement-Verbindungsschicht 3 kann zu jedem anderen geeigneten Zeitpunkt auf das Extrusionselement 7 aufgebracht oder aufkaschiert werden. Gleiches gilt für eine Strukturierung der Kombination aus Lackfolie 2 und Lackfolien- und Kunststoffelement-Verbindungsschicht 3 durch eine noch näher zu beschreibende Strukturierungsvorrichtung 11. Die Lackfolie 2 und wahlweise zusätzlich die darunter liegender Extrussionselement-Verbindungsschicht 3 kann durch die Strukturierungsvorrichtung 11, wie z.B. einen Narbroller 12, eine Besprenkelungs- und/oder Spritzdüseneinrichtung 13, unmittelbar oder zu einem späteren Zeitpunkt nach dem Verlassen der Extrusionsvorrichtung 10 auf das Extrusionselement 7 aufgebracht und durch die Strukturierungsvorrichtung 10 strukturiert werden.

Ebenso kann die Kombination aus der Lackfolie 2 und der Lackfolien- und Kunststoffelement-Verbindungsschicht 3 auch nach einem anschließenden Abkühlbad für das Extrusionselement 7 auf dieses aufgebracht und durch die Strukturierungsvorrichtung 10 strukturiert werden. Die Strukturierung der Lackfolie 2 und wahlweise zusätzlich der darunter liegenden Lackfolien- und Kunststoffelement-Verbindungsschicht 7 kann unmittelbar nach dem Aufbringen oder Aufkaschieren auf das Extrusionselement 7 erfolgen oder auch in einem späteren nachgeschalteten Arbeitsschritt.

Um in einem Ausführungsbeispiel der Erfindung das Kunststoffbauteil 6 auf seiner mit einer Lackfolie 2 zu beschichtenden Außenseite mit einer einer lackierten Oberfläche möglichst ähnlichen Struktur oder Orangenhautstruktur zu versehen, werden gemäß einer Ausführungsform der Erfindung dem Kunststoffmaterial 8 des Kunststoffbauteils 6 zusätzlich die zuvor genannten Partikel 14 zugemischt.

Die Partikel 14 bestehen aus einem Material oder einer Materialkombination welche nicht oder so wenig wie möglich in dem Kunststoffmaterial 8 schmilzt oder aufschmilzt. Daher bilden die Partikel, wie in nachfolgender Fig. 5 gezeigt ist, mit dem Kunststoffmaterial 8 eine strukturierte Oberfläche, die, wenn sie mit der Kombination aus der Lackfolie 2 und der Lackfolien- und Kunststoffelement-Verbindungsschicht 3 zusätzlich beschichtet wird, eine Orangenhaut oder eine einer lackierten Oberfläche möglichst ähnliche Struktur bildet.

Bei dieser Ausführungsform zur Erzeugung einer Orangenhautstruktur oder einer einer lackierten Oberfläche möglichst ähnlichen Struktur auf dem Extrudat bzw. Kunststoffbauteil 6 wird der Kunststoff oder das Kunststoffmaterial 8 unterhalb der Lackfolie 2 durch wenigstens ein geeignetes Additiv in Form von nicht oder nur geringfügig aufschmelzenden Partikeln 14 modifiziert. Dieser Partikelzusatz erzeugt im Kunststoff eine Oberflächenstruktur, welche sich derart auf die Lackfolie 2 nach dem Beschichten des Kunststoffbauteils 1 mit dieser Lackfolie 2 und der Lackfolien- und Kunststoffelement-Verbindungsschicht 7 überträgt oder abbildet, wie in nachfolgender Fig. 5 angedeutet ist, so dass eine Oberfläche ähnlich der Orangenhautstruktur oder der Struktur einer lackierten Oberfläche erzeugt wird. Durch die Art des Modifizierungsstoffes sowie der Menge der Zugabe kann die Struktur des Extrudates bzw. Extrusionselements 7 und damit des Kunststoffbauteils 6 gezielt beeinflusst werden.

Die Ausprägung z.B. der Orangenhaut oder der einer lackierten Oberfläche möglichst ähnlichen Struktur kann durch die Wahl des Durchmessers oder der Größe der Partikel 14 gezielt beeinflusst oder eingestellt werden. Je größer der Durchmesser oder die Größe der Partikel 14 gewählt ist, umso gröber ist die mit der Lackfolie 2 versehene Oberfläche des Extrusionselements 7 bzw. Kunststoffbauteils 6 und je kleiner der Durchmesser oder die Größe der Partikel 14 gewählt ist, umso glatter ist die mit der Lackfolie 2 versehene Oberfläche des Extrusionselements 7 bzw. Kunststoffbauteils 6.

Bei der Herstellung des Extrusionselements 7 bzw. Kunststoffbauteils 6 durch Extrusion wird eine Extrusionsvorrichtung 10 verwendet. Als Extrusionsvorrichtung 10 kann dabei ein Schneckenextruder, beispielsweise ein Einschneckenextruder oder ein Doppelschneckenextruder, oder ein Kolbenextruder verwendet werden. Bei dem Kolbenextruder wird der Druck mittels eines Kolbens erzeugt. Kolbenextruder werden vor allem eingesetzt, wenn sich das zu verarbeitende Material nicht mittels Schneckenextrudern verarbeiten lässt oder ein häufiger Produktwechsel durchgeführt werden soll. Die Erfindung ist jedoch auf die genannten Beispiele für Extrusionsvorrichtungen nicht beschränkt.

In dem in Fig. 4 gezeigten Ausführungsbeispiel weist das Lacktransferfoliensystem 1 neben der Lackfolie 2 und der Lackfolien- und Kunststoffelement-Verbindungsschicht 3 eine optionale Trägerschicht 4 und eine optionale zusätzliche Schutzschicht 5 auf. Die Trägerschicht 4 ist dabei auf der Unterseite der Lackfolien- und Kunststoffelement-Verbindungsschicht 3 und die Schutzschicht 5 auf der Oberseite der Lackfolie 2 angeordnet. Die Trägerschicht 4 wird, vor dem Beschichte des späteren Extrusionselements 7 vor der Extrusionsvorrichtung 10 von der Lackfolien- und Kunststoffelement-Verbindungsschicht 3 abgezogen. Die Schutzschicht 5 bleibt dagegen zunächst auf der Lackfolie 2 und wird, wie in Fig. 3 gezeigt ist, beispielsweise zusammen mit der Lackfolie 2 und der Lackfolien- und Kunststoffelement-Verbindungsschicht 3 auf das Extrusionselement 7 aufgebracht und erst in einem späteren Schritt von der Lackfolie 2 entfernt zum Bereitstellen des fertigen mit der Lackfolie 2 und der Lackfolien- und Kunststoffelement-Verbindungsschicht 3 beschichteten Kunststoffbauteils 6.

Wie in Fig. 3 gezeigt ist, werden die Lackfolie 2 und die Lackfolien- und Kunststoffelement-Verbindungsschicht 3 und sofern vorhanden die zusätzliche Schutzschicht 5 des Lacktransferfoliensystems 1, nachdem das Extrusionselement 7 bzw. Kunststoffbauteil 6 die formgebende Düse 9 der Extrusionsvorrichtung 10 verlassen hat, durch eine Beschichtungsvorrichtung 15 auf einen zu beschichtenden Oberflächenbereich des Extrusionselements 7 bzw. Kunststoffbauteils 6 aufgebracht.

Vorzugsweise wird die Lackfolie 2 und die Lackfolien- und Kunststoffelement-Verbindungsschicht 3 und falls vorhanden die zusätzliche Schutzschicht 5 des Lacktransferfoliensystems 1 z.B. direkt nach dem Verlassen der formgebenden Düse 9 auf das Extrusionselement 7 bzw. das Kunststoffbauteil 6 durch die Beschichtungsvorrichtung 15 aufgebracht, solange das Extrusionselement 7 bzw. Kunststoffbauteil 6 noch warm ist. Anschließend wird das mit der Lackfolie 2 und der Lackfolien- und Kunststoffelement-Verbindungsschicht 3 und falls vorhanden zusätzlichen Schutzschicht 5 beschichtete Extrusionselement 7 bzw. Kunststoffbauteil 6 abgekühlt. Dabei kann das mit der Lackfolie 2 und der Lackfolien- und Kunststoffelement-Verbindungsschicht 3 und falls vorhanden der zusätzlichen Schutzschicht 5 des Lacktransferfoliensystems 1 beschichtete Extrusionselement 7 bzw. Kunststoffbauteil 6 bei Raumtemperatur abkühlen oder mittels einer zusätzlichen nicht dargestellten Kühlungseinrichtung gekühlt werden. Die Lackfolie 2 und die Lackfolien- und Kunststoffelement-Verbindungsschicht 7 und falls vorhanden die zusätzliche Schutzschicht 5 können statt auf das Extrusionselement 7 bzw. Kunststoffbauteil 6 direkt nach dem Verlassen der formgebenden Düse 9 aufgebracht zu werden, auch später auf das Extrusionselement 7 bzw. Kunststoffbauteil 6 aufgebracht werden, beispielsweise vor, während und/oder nach dem Abkühlen des Extrusionselements 7 bzw. Kunststoffbauteils 6.

Während die Lackfolie 2 und die Lackfolien- und Kunststoffelement-Verbindungsschicht 3 auf dem Extrusionselement 7 verbleiben zum Bereitstellen des fertigen Kunststoffbauteils 6, wird die Schutzschicht 5, sofern vorhanden, von der Lackfolie 2 wieder entfernt oder abgezogen. Dies kann beispielsweise bei einem Extrusionselement 7 mit einer Metallbasis 16 nach einem Streckbiegeprozess erfolgen. In dem Streckbiegeprozess wird das mit der Lackfolie 2 und der Lackfolien- und Kunststoffelement-Verbindungsschicht 3 sowie ggf. mit der Schutzschicht 5 beschichtete Extrusionselement 7 mit seiner Metallbasis 16 in eine gewünschte Form gebracht. Die Schutzschicht 5 kann aber auch zu jedem anderen geeigneten Zeitpunkt von der Lackfolie 2 abgezogen werden. Dies kann vor der Extrusionsvorrichtung 10 oder nach dem Verlassen der Extrusionsvorrichtung 10 erfolgen, beispielsweise unmittelbar nach dem Verlassen der Extrusionsvorrichtung 10, vor oder nach dem Strukturieren der Lackfolie 2 und gegebenenfalls der darunterliegenden Lackfolien- und Kunststoffelement-Verbindungsschicht 3 durch die Strukturierungsvorrichtung 11, vor oder nach dem Abkühlen des Extrusionselements 7 usw.. Die Erfindung ist auf die genannten Beispiele nicht beschränkt. Des Weiteren können die Trägerschicht 4 und die Schutzschicht 5 aus demselben Material oder unterschiedlichen Materialen hergestellt sein, je nach Funktion und Einsatzzweck.

Die Beschichtungsvorrichtung 15 kann beispielsweise Rollen oder Rakel (nicht dargestellt) aufweisen, wie in Fig. 3 mit Pfeilen P angedeutet ist, mittels der die Lackfolie 2 und die darunter liegende Lackfolien- und Kunststoffelement-Verbindungsschicht 3 auf das Extrusionselement 7 bzw. Kunststoffbauteil 6 aufgebracht werden. Es kann jedoch auch jede andere Beschichtungsvorrichtung 15 vorgesehen werden, die geeignet ist die Lack-folie 2 und die Lackfolien- und Kunststoffelement-Verbindungsschicht 3 auf wenigstens einen Abschnitt des Extrusionselements 7 zu applizieren oder aufzubringen.

In einer weiteren Ausführungsbeispiel kann zusätzlich oder alternativ zu dem Einbringen von Partikeln 14 in das Kunststoffmaterial, das Extrusionselement 7 bzw. Kunststoffbauteil 6 mit einer Orangenhaut oder mit einer einer lackierten Oberfläche möglichst ähnliche Struktur versehen werden, indem die mit der Lackfolie 2 und der Lackfolien- und Kunststoffelement-Verbindungsschicht 3 versehene Oberfläche des Extrusionselements 7 bzw. Kunststoffbauteils 6 durch eine zuvor genannte Strukturierungsvorrichtung 11 strukturiert wird. Als Strukturierungsvorrichtung 11 kann dabei, wie in Fig. 3 beispielhaft und rein schematisch dargestellt ist wenigstens ein Narbroller 12 vorgesehen werden, welcher die mit der Lackfolie 2 und der Lackfolien- und Kunststoffelement-Verbindungsschicht 3 beschichtete Oberfläche des Extrusionsteils 7 bzw. Kunststoffbauteils 6 mit z.B. einer Orangenhaut oder einer einer lackierten Oberfläche möglichst ähnliche Struktur versieht. Dazu weist der Narbroller 12 eine entsprechend profilierte oder strukturierte Oberfläche 22 auf, wie in Fig. 3 stark vereinfacht dargestellt ist.

Des Weiteren kann als Strukturierungsvorrichtung 11 eine Besprenkelungs- und/oder Spritzdüseneinrichtung 13 vorgesehen werden, wie ebenfalls in Fig. 3 stark vereinfacht dargestellt ist. Die Besprenkelungs- und/oder Spritzdüseneinrichtung 13 ist derart ausgebildet, die mit der Lackfolie 2 des Lacktransferfoliensystems 1 beschichtete Oberfläche des Extrusionsteils 7 bzw. Kunststoffbauteils 6 mit einem Fluid oder Dampf, z.B. Wasser oder Wasserdampf, zu besprenkeln und/oder mit wenigstens einer oder mehreren nicht dargestellten Düsen einen Düsenstrahl, insbesondere Fluidstrahl oder Gasstrahl, auf die mit der Lackfolie 2 beschichtete Oberfläche zu leiten, um die Oberfläche und ggf. die darunter liegender Lackfolien- und Kunststoffelement-Verbindungsschicht 3 zu strukturieren. Die so strukturierte Oberfläche weist vorzugsweise eine Orangehautstruktur oder eine einer lackierten Oberfläche möglichst ähnliche Struktur auf.

Das Lacktransferfoliensystem 1 aus der Lackfolie 2 und der Lackfolien- und Kunststoffelement-Verbindungsschicht 3, sowie der optionalen Schutzschicht 5 und der optionalen Trägerschicht 4 wird der Extrusionsvorrichtung 10 durch eine FolienZuführungsvorrichtung 17 zugeführt und dabei die optionale Trägerschicht 4 von der Lackfolien- und Kunststoffelement-Verbindungsschicht 3 durch die FolienZuführungsvorrichtung 17 entfernt oder abgezogen, bevor die Lackfolien- und Kunststoffelement-Verbindungsschicht 3 mit Lackfolie 2 auf das Extrusionselement 7 bzw. Kunststoffbauteil 6 durch die Beschichtungsvorrichtung 15 aufgebracht wird. Die Lackfolie 2 des Lacktransferfoliensystems 1 ist in Fig. 3 mit einer gepunkteten Linie und die Lackfolien- und Kunststoffelement-Verbindungsschicht 3 mit einer doppeltstrichpunktierten Linie angedeutet.

Die Schutzschicht 5 ist in dem Beispiel in Fig. 1 mit einer gestrichelten Linie angedeutet und wird beispielsweise nach dem Verlassen der Extrusionsvorrichtung 10 von der Lackfolie 2 entfernt, z.B. bevor die Lackfolie 2 und wahlweise zusätzlich die darunter liegende Lackfolien- und Kunststoffelement-Verbindungsschicht 3 wahlweise zusätzlich durch die Strukturierungsvorrichtung 11 strukturiert wird.

Die Lackfolie 2 kann sowohl wenigstens eine schwarz eingefärbt Schicht als auch wenigstens in einer vorbestimmten Lackfarbe eingefärbte Schicht aufweisen, entsprechend der Lackfarbe eines lackierten Karosserieteils, an welchem das Kunststoffbauteil 6 beispielsweise anschließend befestigt wird. Zusätzlich oder alternativ kann auch die Lackfolien- und Kunststoffelement-Verbindungsschicht 3 eingefärbt, z.B. schwarz oder in einer gewünschten Lackfarbe eingefärbt sein. Dadurch kann z.B. sowohl ein schwarzes wie auch ein farbiges, einschließlich weißes, beschichtetes Kunststoffbauteil 6 als Anbauteil für ein Fahrzeug hergestellt werden. Wie zuvor beschrieben kann die Lackfolie 2 sowohl glänzend, insbesondere hochglänzend, matt und/oder metallisch ausgebildet sein, um ein entsprechend beschichtetes Kunststoffbauteil 6 herzustellen.

In Fig. 5 ist eine stark vereinfachte, rein schematische und nicht maßstäbliche Schnittansicht durch ein mit einer Kombination aus einer Lackfolie 2 und einer Lackfolien- und Kunststoffelement-Verbindungsschicht 3 beschichtetes Kunststoffbauteil 6 gemäß einem weiteren Ausführungsbeispiel der Erfindung gezeigt.

Das Kunststoffbauteil 6 gemäß Fig. 5 unterscheidet sich dabei von dem Kunststoffbauteil in den Fig. 2, 3 und 4 dadurch, dass das Kunststoffbauteil 6 nicht vollständig als Extrusionselement sondern nur teilweise als Extrusionselement 7 aus einem Kunststoffmaterial 8 aus wenigstens einem Kunststoff hergestellt ist. Das Kunststoffbauteil 1 in dem Ausführungsbeispiel in Fig. 5 weist eine Basis 16, z.B. ein Metallprofil aus Aluminium, einer Aluminiumlegierung oder Stahl usw., auf, die mit dem Extrusionselement 7 versehen oder beschichtet ist.

Zumindest ein Abschnitt der Basis 16 wird durch Extrusion, wie zuvor beispielhaft mit Bezug auf die Fig. 3 und 4 beschrieben wurde, mit dem Kunststoffmaterial 8 beschichtet zum Ausbilden des Extrusionselement 7, wobei dem Kunststoffmaterial 8 zur späteren Ausbildung einer strukturierten Oberfläche wahlweise zusätzlich Partikel 14 zugemischt werden können, wie beispielhaft mit Bezug auf Fig. 3 beschrieben wurde. Um unnötige Wiederholungen zu vermeiden wird auf die Beschreibung zu Fig. 3 verwiesen.

Bei dem in Fig. 5 gezeigten Ausführungsbeispiel wird z.B. die Sichtseite oder Oberseite der Basis 16 aus einer Aluminiumlegierung durch Extrusion mit dem Kunststoffmaterial 8 aus wenigstens einem Kunststoff beschichtet. Zur Ausbildung zusätzlich einer strukturierten Oberfläche, beispielsweise einer einer Orangenhaut oder einer einer lackierten Oberfläche möglichst ähnliche Struktur, sind dem Kunststoffmaterial 6 z.B. zusätzlich Partikel 14 beigemischt. In dem in Fig. 5 gezeigten Ausführungsbeispiel sind Partikel 14 z.B. in Form von Kügelchen mit einem zur Erzeugung einer strukturierten Oberfläche geeigneten oder vorbestimmten Durchmesser aus einem Material oder einer Materialkombination hergestellt, welches nicht oder so wenig wie möglich in dem Kunststoffmaterial schmilzt oder aufschmilzt und, welches geeignet ist

Die Partikel 14 in Form von Kügelchen können, wie zuvor mit Bezug auf Fig. 1 und 2 beschrieben wurde, beispielsweise aus Polyvinylchlorid (PVC), vernetztem Gummi, Holz, aus wenigstens einem Duromer oder Duroplast, wie z.B. Epoxidharz, Polyurethan usw., aus einem mineralischen Werkstoff, Talkum, Kreide, Glas, Keramik, Polyamid, Metall usw.. hergestellt sein. Die Erfindung ist aber auf die genannten Materialien für die Partikel nicht beschränkt. Es kann jedoch auch jedes andere Material oder Materialkombination eingesetzt werden die geeignet ist, um dem Kunststoffmaterial für das Extrusionselement 7 des Kunststoffbauteils beigemischt zu werden, um eine gewünschte Oberflächenstruktur zu erzeugen.

Anschließend wird außen auf die mit dem Kunststoffmaterial 8 beschichtete Oberfläche der Basis 16 des Kunststoffbauteils 6, die Lackfolie 2 mit der Lackfolien- und Kunststoffelement-Verbindungsschicht 3 aufgebracht, wie zuvor beispielhaft mit Bezug auf die Fig. 1, 2, 3 und 4 beschrieben wurde. In Fig. 5 ist die Lackfolie 2 ebenfalls mit einer gepunkteten Linie und die Lackfolien- und Kunststoffelement-Verbindungsschicht 3 mit einer doppeltstrichpunktierten Linie angedeutet.

Zusätzlich oder alternativ kann das mit der Lackfolie 2 und der Lackfolien- und Kunststoffelement-Verbindungsschicht 3 beschichtete Extrusionselement 7 des Kunststoffbauteils 6 auch mittels einer Strukturierungsvorrichtung strukturiert werden, wie sie zuvor mit Bezug auf die Fig. 3 und 4 beschrieben wurde.

Die in Fig. 5 und zuvor in den Fig. 1 bis 4 gezeigten beschichteten Kunststoffbauteile 6 können beispielsweise als Blende oder Leiste, z.B. Dachleiste usw., an einem Fahrzeug vorgesehen werden. Ein beschichtetes Kunststoffbauteil 6 mit einer Basis 16 insbesondere aus einer Aluminiumlegierung hat den Vorteil, dass es später bei Bedarf gebogen werden kann, um beispielsweise als eine Dachleiste entlang des Dachs und wenigstens entlang einer der Fahrzeugsäulen zu verlaufen.

Eine solche Blende oder Leiste, insbesondere Dachleiste bei einem Fahrzeug, kann als beschichtetes Kunststoffbauteil 1 ein oder mehrere Zusatzbauteile aufweisen, die jeweils als ein beschichtetes Kunststoffteil oder Kunststoffbauteil gemäß der Fig. 1 bis 5 ausgebildet sind und sich vorzugsweise optisch nicht oder so wenig wie möglich von der Dachleiste als beschichtetem Kunststoffbauteil 6 unterscheiden. Im Falle einer Dachleiste kann dieses Zusatzbauteil beispielsweise ein Klappenelement sein zum Öffnen und Verschließen einer Öffnung in der Dachleiste. Das Klappenelement kann dabei in die geöffnete Position, z.B. nach außen geklappt werden, um eine Öffnung in der Dachleiste freizugeben, zum Montieren von Elementen wie Dachträgern usw. an dem Fahrzeug. Das Zusatzbauteil kann dabei wie die Dachleiste als beschichtetes Kunststoffbauteil 6, wie zuvor mit Bezug auf die Fig. 1 bis 5 beschrieben ist, ausgebildet werden.

In einer alternativen Ausführungsform kann das Zusatzbauteil als beschichtetes Kunststoffbauteil 6 ausgebildet werden, wie in Fig. 6 rein schematisch und stark vereinfacht angedeutet ist.

Fig. 6 zeigt eine Schnittansicht einer Spritzgussform 18 zur Herstellung eines beschichteten Kunststoffbauteils 6 als Zusatzbauteil. Dabei weist die Spritzgussform zwei Formhälften 19, 20 auf.

In dem in Fig. 6 gezeigten Ausführungsbeispiel ist ein Abschnitt der Innenseite einer der Formhälften 19 wahlweise zusätzlich mit einer Strukturierung 21 versehen zum Erzeugen einer strukturierten Oberfläche bei dem Kunststoffbauteil 6, falls gewünscht. Eine derartige Strukturierung ist aber optional und kann ebenso entfallen, je nach Funktion und Einsatzzweck des Kunststoffteils.

Dabei wird ein Lacktransferfoliensystem 1 aus der Lackfolie 2 und der Lackfolien- und Kunststoffelement-Verbindungsschicht 3 in die Spritzgussform 18 eingelegt und mit einem Kunststoffmaterial 8 aus wenigstens einem Kunststoff hinterspritzt. Die Kunststoffhinterspritzung bildet dabei das Spritzgusselement 7 aus. Das Kunststoffmaterial 8 zum Hinterspritzen der Lackfolien- und Kunststoffelement-Verbindungsschicht 3 kann insbesondere Polyvinylchlorid (PVC) oder Polypropylen (PP) sein. Die Härte des Polyvinylchlorids (PVC) ist dabei beliebig. Je nach Funktion und Einsatzzweck kann beispielsweise sowohl Hart-PVC als auch Weich-PVC verwendet werden.

Die Lackfolie 2 ist mit einer gepunkteten Linie und die Lackfolien- und Kunststoffelement-Verbindungsschicht 3 mit einer doppeltstrichpunktierten Linie angedeutet.

Dabei wird die Lackfolie 2 und gegebenenfalls zusätzlich die Lackfolien- und Kunststoffelement-Verbindungsschicht 3 gegen die strukturierte Innenseite der Formhälfte 19 gedrückt, um das herzustellende Kunststoffteil 17 beispielsweise mit einer zusätzlich strukturierten Oberfläche zu versehen, d.h. zumindest einer strukturierten Lackfolie 2 oder einer Kombination aus strukturierter Lackfolie 2 und der Lackfolien- und Kunststoffelement-Verbindungsschicht 3. Die Lackfolien- und Kunststoffelement-Verbindungsschicht 3 wird wiederum mit dem Kunststoffmaterial 8 hinterspritzt um eine geeignete Verbindung der Lackfolie 2 und des erzeugten Kunststoffelements 7 bereitzustellen.

Das fertige mit der Lackfolie 2 beschichtete Kunststoffbauteil 6 kann dabei mit einer Oberflächenstruktur versehen werden, welche eine einer Orangenhaut oder eine einer lackierten Oberfläche möglichst ähnliche Struktur aufweist.

Wie zuvor mit Bezug auf die Fig. 1-5 beschrieben wurde, kann die Lackfolie 2 wenigstens eine oder mehrere Schichten aufweisen. Des Weiteren kann das beschichtete Kunststoffbauteil 6 und insbesondere dessen Kunststoffelement 7 durch ein Einkomponenten-Spritzgussverfahren oder durch ein Mehrkomponenten-Spritzgussverfahren hergestellt werden.

Wie zuvor beschrieben, können als Kunststoffbauteil 6 Anbauteile für ein Fahrzeug, wie Blenden oder Leisten, z.B. Dachleisten, Fahrzeugscheibeneinfassungen usw. erzeugt werden. Die in Fig. 1, 2 und 3 gezeigte Form des Kunststoffbauteils 6 und dessen Querschnitt ist rein beispielhaft und die Erfindung ist nicht darauf beschränkt. Es kann jede Form und jeder Querschnitt erzeugt werden, welcher insbesondere durch eine Extrusionsvorrichtung erzeugbar ist. Ebenso ist die Erfindung auch nicht auf die in Fig. 3 gezeigte spezielle Ausführungsform des Kunststoffbauteils 6 aus Extrusionselement 7 und Basis 16 beschränkt. Die Basis 16 kann jedes beliebige Profil aufweisen, je nach Funktion und Einsatzzweck. Des Weiteren kann das Extrusionselement beliebig geformt oder die Basis 16 damit beschichtet sein, je nach Funktion und Einsatzzweck.

Mittels des erfindungsgemäßen beschichteten Kunststoffbauteils und seiner Herstellung können aufwendige Arbeitsprozesse besser getrennt werden, z.B. kann die Herstellung von Dachleisten in Wagenfarbe in einem Extrusionsprozess an einem Ort oder in einem Land erfolgen während das Konfektionieren, z.B. Streckbiegen der Dachleiste, an einem anderen Ort oder Land erfolgen kann. Dies kann beispielsweise an Fertigungsstandorten zum Tragen kommen bei denen eine Lackierung der Teile nicht möglich ist. Identische visuelle und haptische Eigenschaften von Kunststoffteilen in Wagenfarbe können erzeugt werden, trotz unterschiedlichen Kunststoffmaterials und Herstellverfahren.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar. Die zuvor beschriebenen Ausführungsformen sind miteinander kombinierbar insbesondere einzelne Merkmale davon.

### Bezugszeichenliste

- 1: Lacktransferfoliensystem
- 2: Lackfolie
- 3: Lackfolien- und Kunststoffelement-Verbindungsschicht
- 4: Trägerschicht
- 5: Schutzschicht
- 6: Kunststoffbauteil
- 7: Extrusionselement bzw. Spritzgusselement
- 8: Kunststoffmaterial
- 9: Formgebende Düse
- 10: Extrusionsvorrichtung
- 11: Strukturierungsvorrichtung
- 12: Narbroller
- 13: Besprenkelungs- und/oder Spritzdüseneinrichtung
- 14: Partikel
- 15: Beschichtungsvorrichtung
- 16: Basis
- 17: Folienzuführungsvorrichtung
- 18: Spritzgussform
- 19: Formhälfte
- 20: Formhälfte
- 21: Strukturierung
- 22: Profilierte Oberfläche

## Patentansprüche

1. Kunststoffbauteil (6) für ein Fahrzeug, wobei das Kunststoffbauteil (6) als Extrusions- oder Spritzgusselement (7) oder als Extrusions- oder Spritzgusselement (7) mit einer Basis (16) ausgebildet ist,
wobei wenigstens ein Abschnitt der Außenseite des Extrusions- oder Spritzgusselements (7) mit einer Kombination aus einer Lackfolie (2) und einer Lackfolien- und Kunststoffelement-Verbindungsschicht (3) beschichtet ist,
wobei die Lackfolien- und Kunststoffelement-Verbindungsschicht (3) zwischen der Lackfolie (2) und der Außenseite des Extrusions- oder Spritzgusselements (7) vorgesehen ist und eine stoffliche Verbindung mit dem Extrusions- oder Spritzgusselement (7) und eine stoffliche Verbindung mit der Lackfolie (2) eingeht,
wobei die stoffliche Verbindung der Lackfolien- und Kunststoffelement-Verbindungsschicht (3) mit der Lackfolie (3) und dem Extrusions- oder Spritzgusselement (7) ausreichend ist, um die Lackfolie (2) mit dem Extrusions- oder Spritzgusselement (7) durch die Lackfolien- und Kunststoffelement-Verbindungsschicht(3) fest zu verbinden, wobei das Extrusions- oder Spritzgusselement (7) aus einem Kunststoffmaterial (8) hergestellt ist, welches ohne die Lackfolien- und Kunststoffelement-Verbindungsschicht (3) als Zwischenschicht mit der Lackfolie (2) keine oder keine ausreichende stoffliche Verbindung eingeht.

2. Kunststoffbauteil nach Anspruch 1,
**dadurch gekennzeichnet,**
**dass** das Kunststoffmaterial (8) des Extrusions- oder Spritzgusselement (7) aus einem Kunststoff oder einer Kombination aus wenigstens zwei Kunststoffen besteht.

3. Kunststoffbauteil nach Anspruch 1 oder 2,
**dadurch gekennzeichnet,**
**dass** das Kunststoffmaterial (8) aus Acrylnitril-Butadien-Styrol-Copolymere (ABS), Polycarbonat (PC) Polyvinylchlorid (PVC), Polypropylen (PP) und/oder Benzylcellulose (BC) besteht.

4. Kunststoffbauteil nach einem der vorstehenden Ansprüche,
**dadurch gekennzeichnet,**
**dass** die Lackfolien- und Kunststoffelement-Verbindungsschicht (3) aus wenigstens einer thermoplastischen Schicht oder einer Kombination von mehreren thermoplastischen Schichten aus demselben oder unterschiedlichen Thermoplasten besteht.

5. Kunststoffbauteil nach Anspruch 4,
**dadurch gekennzeichnet,**
**dass** die wenigstens eine thermoplastische Schicht eine Acrylnitril-Butadien-Styrol (ABS)-Schicht, eine Polyamide (PA)-Schicht, eine Polylactat (PLA)-Schicht, eine Polymethylmethacrylat (PMMA)-Schicht, eine Polycarbonat (PC)-Schicht, eine Polyethylenterephthalat (PET)-Schicht, eine Polyethylen (PE)-Schicht, eine Polypropylen (PP)-Schicht, eine Polystyrol (PS)-Schicht, eine Polyetheretherketon (PEEK)-Schicht oder eine Polyvinylchlorid (PVC)-Schicht ist.

6. Kunststoffbauteil nach Anspruch 4,
**dadurch gekennzeichnet,**
**dass** nur die Lackfolie (2) oder die Lackfolie (2) und die Lackfolien- und Kunststoffelement-Verbindungsschicht (3) strukturiert sind.

7. Kunststoffbauteil nach Anspruch 6,
**dadurch gekennzeichnet,**
**dass** das Kunststoffmaterial (8) zusätzlich mit Partikel (14) versehen ist, wobei die Partikel (14) aus einem Material hergestellt sind, welches nicht oder so wenig wie möglich mit dem Kunststoffmaterial (8) aufschmilzt zur Ausbildung einer strukturierten Oberfläche des Extrusionselements (7), wobei das Material der Partikel (14) insbesondere Polyvinylchlorid, wenigstens ein nicht aufschmelzender Kunststoff, ein mineralischer Werkstoff, ein keramischen Werkstoff, Talkum, Kreide und/oder Glas ist.

8. Kunststoffbauteil nach Anspruch 7,
**dadurch gekennzeichnet,**
**dass** der Anteil an Partikeln (14) in dem Kunststoffmaterial (8) des Extrusionsteils (7) in einem Bereich von 20% bis 30% liegt.

9. Kunststoffbauteil nach Anspruch 7 oder 8,
**dadurch gekennzeichnet,**
**dass** die Partikel (14) einen Durchmesser in einem Bereich von 40µm bis 60µm und vorzugsweise von 45µm bis 55µm und besonders bevorzugt von 50µm +/-4µm aufweisen.

10. Kunststoffbauteil nach einem der vorstehenden Ansprüche,
**dadurch gekennzeichnet,**
**dass** nur die Lackfolie (2) oder die Lackfolie (2) und die Lackfolien- und Kunststoffelement-Verbindungsschicht (3) durch eine Strukturierungsvorrichtung (11) strukturiert sind, wobei die Strukturierungsvorrichtung (7) insbesondere wenigstens ein Narbroller (8) und/oder eine Besprenkelungs- und/oder Spritzdüseneinrichtung (10) ist.

11. Kunststoffbauteil nach einem der vorstehenden Ansprüche,
**dadurch gekennzeichnet,**
**dass** das Kunststoffbauteil (6) eine Fahrzeugblende, Fahrzeugleiste, insbesondere Dachleiste oder Wasserabweiserleiste, eine Fahrzeugscheibeneinfassung oder eine Schachtleiste ist.

12. Kunststoffbauteil nach Anspruch 9,
**dadurch gekennzeichnet,**
**dass** das Kunststoffbauteil (6) ein Zusatzbauteil aufweist oder als ein Zusatzbauteil ausgebildet ist.

13. Kunststoffbauteil nach einem der vorstehenden Ansprüche,
**dadurch gekennzeichnet,**
**dass** das Extrusions- oder Spritzgusselement (7) als eine Beschichtung auf zumindest einem Abschnitt der Basis (16) aufgebracht ist und die Basis (16) vorzugsweise ein Profil aus Metall und insbesondere aus Aluminium, einer Aluminiumlegierung oder Stahl ist.

14. Verfahren zur Herstellung eines Kunststoffbauteils nach einem der Ansprüche 1 bis 13,
**gekennzeichnet durch**,
Bereitstellen einer Extrusionsvorrichtung (5);
Bereitstellen einer Beschichtungsvorrichtung (15);
Bereitstellen eines Lacktransferfoliensystems (1), welches wenigstens eine Kombination aus einer Lackfolie (2) und einer auf der Unterseite der Lackfolie (2) angeordneten Lackfolien- und Kunststoffelement-Verbindungsschicht (3) aufweist,
Herstellen eines Kunststoffbauteils (1) als Extrusionselement (7) oder als Extrusionselement (7) mit einer Basis (16) aus einem Kunststoffmaterial (8) durch die Extrusionsvorrichtung (5);
Beschichten wenigstens eines Abschnitts der Außenseite des Extrusionselement (7) mit der Kombination aus der Lackfolie (2) und der Lackfolien- und Kunststoffelement-Verbindungsschicht (3), wobei die Lackfolien- und Kunststoffelement-Verbindungsschicht (3) zwischen der Lackfolie (2) und dem Extrusionselement (7) auf dem Extrusionselement (7) angeordnet ist.

15. Verfahren zur Herstellung eines Kunststoffbauteils nach einem der Ansprüche 1 bis 13,
**gekennzeichnet durch**,
Bereitstellen einer Spritzgussform (18) mit einer ersten und zweiten Formhälfte (19, 20); Bereitstellen eines Lacktransferfoliensystems (1), welches wenigstens eine Kombination aus einer Lackfolie (2) und einer auf der Unterseite der Lackfolie (2) angeordneten Lackfolien- und Kunststoffelement-Verbindungsschicht (3) aufweist,
Einlegen der Kombination aus der Lackfolie (2) und der Lackfolien- und Kunststoffelement-Verbindungsschicht (3) in eine der Formhälften (19, 20), derart, dass die Lackfolie (2) der Innenseite der Formhälfte gegenüberliegt und die Rückseite der Lackfolien- und Kunststoffelement-Verbindungsschicht (3) hinterspritzbar ist;
Hinterspritzen der Rückseite der Lackfolien- und Kunststoffelement-Verbindungsschicht (3) mit dem Kunststoffmaterial (8) zum Erzeugen des Spritzgusselements (8); und Entnehmen des mit der Lackfolie (2) und der Lackfolien- und Kunststoffelement-Verbindungsschicht (3) beschichteten Spritzgusselements (8) als fertiges beschichtetes Kunststoffbauteil (6).
